# EUROPEAN PATENT SPECIFICATION

(11) **EP 1 236 339 B1**
(45) Date of publication and mention of the grant of the patent: **15.08.2007**
(21) Application number: 99974225.7
(22) Date of filing: 26.11.1999
(51) Int. Cl.: H04M 3/51, H04Q 3/00

(54) **SYSTEM AND METHOD FOR COMMUNICATING DATA TO A CALL DESTINATION**
SYSTEM UND VERFAHREN ZUR ÜBERTRAGUNG VON DATEN ZU EINEM ANRUFZIEL
SYSTEME ET PROCEDE DE COMMUNICATION DE DONNEES A UNE DESTINATION D'APPEL

(43) Date of publication of application: 04.09.2002
(73) Proprietor: Nortel Networks Limited, St Laurent, Québec H4S 2A9 (CA)
(72) Inventor: SELLS, Roy, Keith, Nepean, Ontario K2J 1V2 (CA); LEEDER, Michael, Anthony, Stittsville, Ontario K2S 1S4 (CA)
(74) Representative: Boyce, Conor
(86) International application number: PCT/CA1999/001134
(87) International publication number: WO 2001/039477

(56) References cited:
- EP-A- 0 907 280
- EP-A- 0 954 153
- WO-A-98/51092
- WO-A-99/30293
- DE-A- 19 623 689
- US-A- 5 696 809

## Description

### FIELD OF THE INVENTION

The present invention relates to communicating information to a call destination, and more particularly to a method of communicating a reference to that information to a call destination for use by the call destination to access the information.

### BACKGROUND OF THE INVENTION

In recent years, the proliferation of services such as 1-800, 1-900 and Virtual Private Networks has resulted in a corresponding proliferation of Intelligent Networks (INs) to support such services. Enhanced Intelligent Networks often extract information from a calling party, and use this information to influence selection of the call destination. For example, an IN might extract a caller's account number and Personal Identification Number (PIN), and use this information to route the call to different call destinations according to whether the caller is a Gold, Silver or Bronze account holder.

Such extracted information is often also required by the call destination. However, there is presently no efficient way for the IN to communicate this information to the call destination. Disadvantageously, therefore, the caller is often required to redundantly provide to the call destination the same information that he or she has already provided to the Intelligent Network.

It is not desirable to include such information in standard call set-up messages, due to the limited information content and standard format of these messages. Modification of standard call set-up messages to include significant additional information may also require difficult and costly modifications to network hardware and software, such as extensions to the service logic of the originating and terminating switches.

in some digital networks, User-to-User Information (U.U1) signaling has been used to transmit information from the caller to the called party, through call control messages. However, each category of UUI message is restricted to a maximum number of 128-byte packets. Use of UUI signaling to exchange data, especially when invoked by customer premises equipment (CPE), has not been made widely available by system operators, probably because it would add additional load in the form of extra message traffic on the voice network and could provide the potential for abuse or network impact.

Computer Telephony Interfaces (CTls) between networks and certain types of call destinations, typically Automatic Call Distributors, are known. However, these interfaces are generally between the call destination and the end network switch, rather than the Intelligent Network Service Control Point (IN SCP). There is presently no efficient way for significant addition information to be transmitted from the Intelligent Network Service Control Point to the end switch. Establishment of direct CTI connections between the IN SCPs and all the call destination terminating devices is not practical as there are potentially many destinations that would want to use this service from an operator and therefore, the SCP would be required to set up and maintain many CTI sessions. This would place an unacceptable load on the network SCPs. Thus, it is not feasible to use Computer Telephony Interfaces to relay the extracted information from the IN to the call destination.

DE 196 23 689 discloses communicating data to a call destination, comprising: detecting a call request to a call destination, said call request from a call source; and communicating a reference to data stored in a data server to call destination equipment associated with said call destination, to enable said call destination equipment to access said data server and obtain said data for use during the requested call.

US 5,696,809 discloses a method and apparatus according to the preamble of independent claims 1 and 9.

However, this data only relates to the call destination connected to the call destination equipment and as such provides no information about the call source to the call destination.

Therefore, existing technologies are inadequate to allow an Intelligent Network to communicate information extracted from a caller to the call destination, as such technologies impose limits on the amount of information which can be communicated, are complex, and may result in unacceptable loading of the network.

The present invention addresses the above need by providing a method of communicating data to a call destination characterized according to claim 1.

The method allows the call destination to receive, from a data server, data which may include data that has been extracted from a caller or from the switching and services environment (Service Control Point (SCP), Service Switching Point (SSP)) and stored at the data server. This is accomplished by detecting a call request to the call destination, and communicating data from the data server to equipment at the call destination, in response to the call request. More particularly, this may be accomplished by detecting an incoming call request at a call destination, obtaining a "file reference" from the call request and then communicating with a data server to obtain data associated with the call request.

In one embodiment of the invention, a reference to the stored data is communicated to the call destination, to enable equipment at the call destination to access the data server to obtain the data. For example, a file reference ID or address identifying a data file on the data server may be included in an existing field of a standard call set-up message. Upon receiving the call set-up message, the call destination equipment extracts the file reference ID from the call set-up message, and uses the file reference ID to access the corresponding data file at the data server. Where the data server is intemet-based, the call destination equipment may establish an internet session to access the data, independently of the remainder of the call set-up procedure or of the call itself and of the voice network.

The present invention does not require any modification to the format of standard call set-up messages, nor does it require User-to-User Signaling capability. Thus, there is no need to extend the service logic of the network Service Control Point or Service Switching Point or to perform other difficult or expensive modifications to existing network hardware and software.

The call set-up message preferably contains only a reference to the stored data, rather than containing the stored data itself. Therefore, the amount of data which may be communicated to the call destination is not limited by call set-up protocols. A virtually unlimited amount of data, subject only to the capacity of the data server(s), may be stored at the data server and communicated to the call destination equipment.

Preferably, the invention is partly implemented in a Service Control Function (SCF) which receives from a Service Switching Function (SSF) associated with a call originator a call query relating to a pre-defined service and communicates to a SSF associated with a call destination a reference to a data server, in response to the call query.

Preferably, the invention is partly implemented in a Service Switching Function (SSF) which receives from a Service Control Function (SCF) a reference to a data server and communicates the reference from the SSF to equipment at a call destination. In one embodiment this is done within standard parameters of a standard call set up request.

The present invention allows a network (e. g. an intelligent network, IP network etc.) to communicate information extracted from the caller to the call destination. The need for the same information to be extracted from the caller by both the Intelligent Network and the call destination is effectively eliminated. The invention can preferably be implemented, by storing the extracted information as data at a data server and including a reference to the data in a standard call set-up message, so that a virtually unlimited amount of information may be extracted from the caller and forwarded to the call destination. The format of standard call set-up messages need not be modified, and it is unnecessary to perform difficult or expensive modifications to existing network hardware or software

In one embodiment, the proposed method allows the network to quickly complete the data exchange task and causes the data to be stored into a high availability server and allow the retrieval of the data to proceed outside of the voice network over a data oriented network such as an Internet.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention,
- Figure 1: is a schematic diagram of a system for communicating data to a call destination, according to a first embodiment of the invention;
- Figure 2: is a schematic diagram of a system for communicating data to a call destination, according to a second embodiment of the invention;
- Figure 3: is a schematic diagram of a system for communicating data to a call destination, according to a third embodiment of the invention;
- Figure 4: is a block diagram of a service control point shown in Figures 1-3;
- Figure 5: is a block diagram of a service switching point shown in Figures 1-3; and
- Figure 6: is a schematic representation of the passage of messages between various components of the systems shown in Figures 1-3.

### DETAILED DESCRIPTION

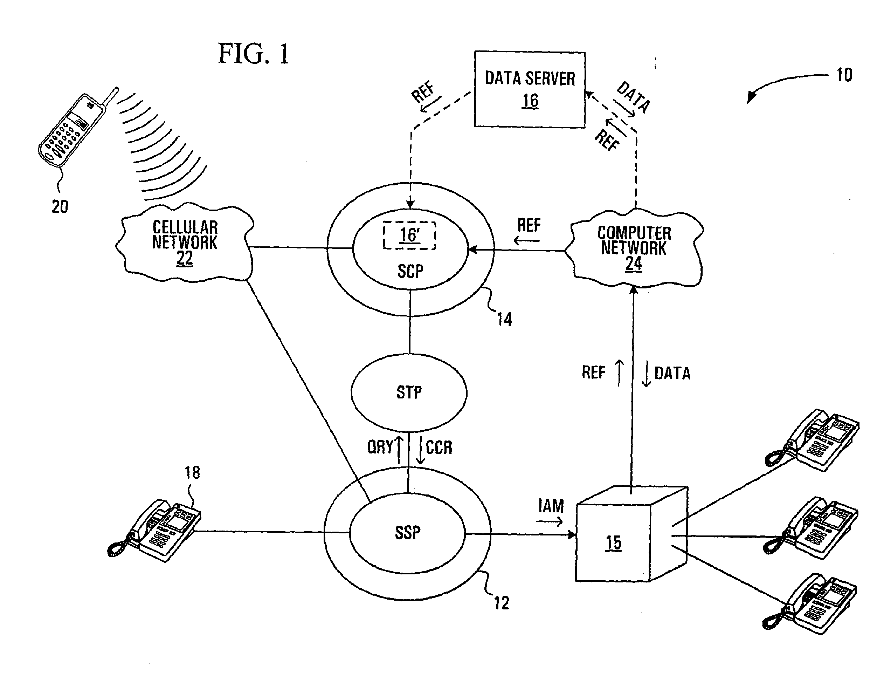

With reference to the figures and in particular with reference now to Figure **1**, a block diagram of a communications system **10** is depicted in accordance with a preferred embodiment of the present invention. Communications system **10** is an example of a communications system in which the processes and the apparatus of the present invention may be implemented to provide a mechanism for communicating data to a call destination.

In general the communications system **10** is capable of communicating data to a call destination and includes a Service Switching Function (SSF) **12**, a Service Control Function (SCF) **14**, and a data server **16**. Effectively, the system functions to detect a call request made to a call service by a communications appliance **18** and in response causes data to be communicated from the data server **16** to equipment **15** at a call destination identified by the service. A communications appliance may be a conventional telephone or a computer, for example, or may be a cellular telephone **20**, communicating through a cellular telephone network **22**, for example.

### SSF-General

To facilitate the functionality provided by the present invention, the SSF 12 may be implemented by a Service Switching Point (SSP) of the type normally employed in a Signaling System No. **7** system or Common Channel Signaling No. **7** system. Alternatively, SSF functionality may be provided in an IP network by a Media Gateway Controller (MGC), Softswitch or Gatekeeper, for example. In general the SSF function may be provided by a device which can implement a call setup function, triggering and has the ability to stop and setup a call based on the results of a call query. In this embodiment we show only one SSP, although there may be a plurality of SSPs in any communication system utilizing the features of the present invention. It is well understood by those of ordinary skill in the art how SSPs can be interconnected to communicate with each other in an SS7 system and therefore no further detail is provided here.

Effectively a SSP is an exchange in a telephone network. A SSP may be combination of a voice switch and a Signaling System No. **7** (SS**7** or CCS**7**) switch or an adjunct computer connected to the voice switch of a local exchange, for example. Each switch includes a switch fabric with input and output ports used to route a call to a destination. The SSP provides the functionality of communicating with the voice switch via the use of primitives in creating packets, or signal units, needed for transmission in a SS**7** network. In routing calls, a SSP will send requests or queries to a database to determine where to route a call. The SSP will use the information provided by the call party, such as dialed digits, to determine how to connect the call.

### SCF-General

The SCF **14** may be implemented by a Service Control Point (SCP) of the type normally found in a Signaling System No. **7** system or Common Channel Signaling No. **7** system, with suitable modifications as described below. In general the SCF may be implemented by any device which has a signaling interface and which allows service logic to execute at run time.

A SCP serves as an interface to various databases, which may contain information about subscriber services, routing of special service numbers, calling card validation and fraud protection and Advanced Intelligent Network (AIN) services, for example. The SCP usually includes a computer used as a front end to a computer database.

Each SSP may communicate with a SCP using Transaction Capabilities Application Part (TCAP) messages to invoke services for a particular call.

### Data Server

As shown in Figure **1**, the data server **16** may be located internal or external to the SCP **14** and in direct communication therewith and may have a computer network interface to facilitate at least look up access over a computer network **24** by the call destination equipment **15**. By computer network, we mean any network which facilitates the transfer of data from the data server 16 to the call destination equipment **15** and this may include a local area network, an intranet or an internet such as the public internet, or any combinations of these, for example.

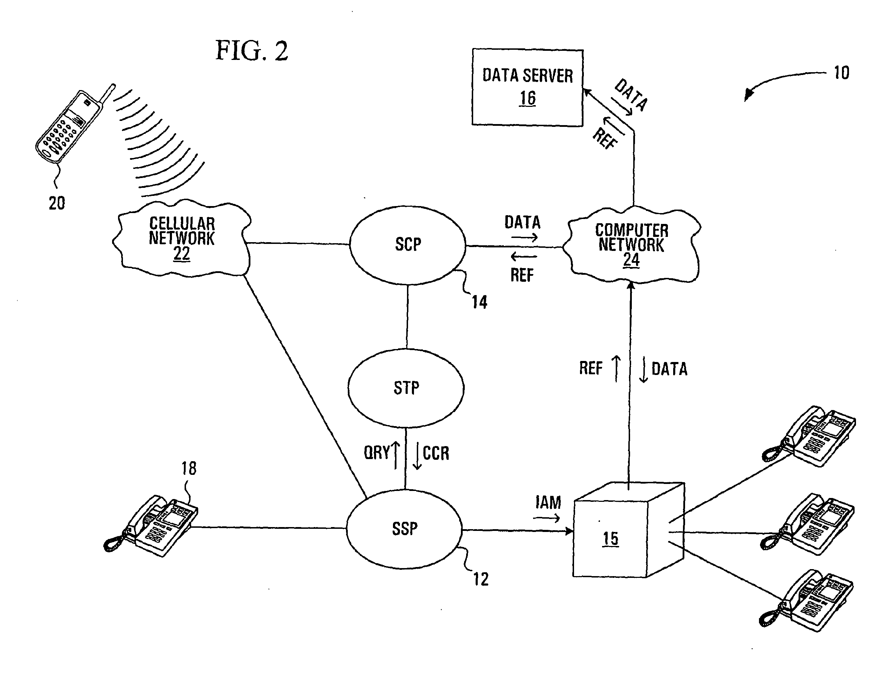

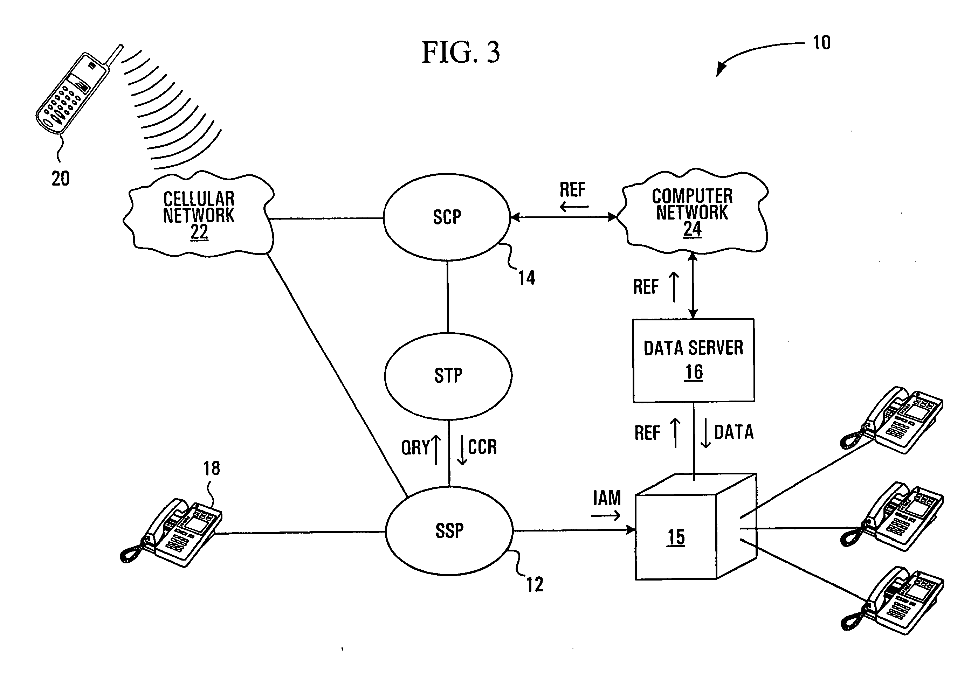

Alternatively, referring to Figure **2**, the data server **16** may be in communication with both the SCP **14** and the call destination equipment **15** through the computer network **24** of the type described above. Or, alternatively, referring to Figure **3**, the data server **16** may be located remotely from the SCP **14**, but in direct communication with the call destination equipment **15,** such as by an I/O port connected to an internal bus of the call destination equipment **15,** for example. The main requirement is that the SCP **14** and the call destination equipment **15** may be placed in communication with the data server **16** and the SCP **14** can communicate a reference identifying relevant data at the data server **16**, to the call destination equipment **15** such that the call destination equipment **15** can access the data server **16** to obtain this data. In general, the invention provides for the data to be held on a data server supported by the network operator or on a data server operated by the owner of the destination station, for example. In either case, the file reference is passed to the destination.

In addition to making data available to the destination of a call, data may be made available to any other designated party. This may be accomplished simply by storing the data into designated locations associated with designated parties on a per call basis. This can be advantageous to provide advice of charges and/or hotel billing services, for example. In this case, a file reference identification need not be passed but rather the designated parties would know where to "look" for information at the data server. Thus, the data server may act rather like a pre-arranged drop box.

In Figures **1-3**, terminating devices or call destination equipment **15** may include communications appliances such as a private branch exchange (PBX) or automatic call distribution device (ACD), for example.

The illustrations in Figures **1**, **2** and **3** are not meant to imply architectural limitations on the present invention but rather are exemplary architectures capable of implementing the present invention.

In general, the functions of the SSP **12** with which the call originating communications appliance is associated are conventional in connection with call setup procedures to a point where a request to establish a call is received at the Service Control Point **14**. The Service Control Point **14** is configured to respond in an unconventional manner, in accordance with the present invention and such unconventional response includes communicating with the data server **16** and transmitting a reference to data at the data server to the SSP associated with the call destination equipment **15**. In the embodiment shown, the SSP associated with the call destination equipment is the same one that is associated with the communications appliance which initiated the call, therefore, the SSP shown is configured to execute the normal functionality of an SSP in an SS7 system and to perform an additional function in accordance with the present invention. This additional function involves communicating the reference to the call destination equipment **15**. The call destination equipment **15** is configured to use the reference to establish communications with the data server **16** and to locate the data at the data server and use such data at the call destination equipment **15** to fill out or update customer profiles, or route calls, for example.

### Service Control Point

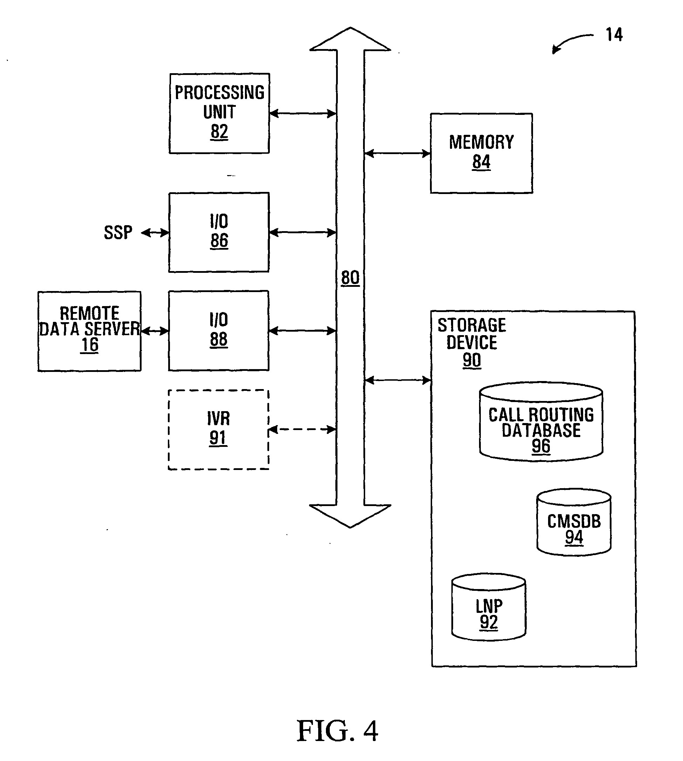

To understand the operation of the SCP in accordance with the present invention, Figure **4** provides a block diagram of a Service Control Point (SCP) such as SCP **14.**

SCP **14** includes a bus **80** (or shared network, shared memory etc.) interconnecting one or more processing circuits such as processing unit **82**, a memory **84**, an input/output (I/O) unit **86**, a I/O unit **88**, a storage device **90** and a optional Intelligent Voice Response (IVR) unit **91**. The memory **84** is a computer readable medium on which is stored codes for directing the processing circuit to execute the functionality described therein. The memory maybe loaded by a computer data signal embodied in a carrier wave, for example, having code segments for providing the codes forming the stored codes described above.

The storage device **90** includes a number of databases, such as, for example, line number portability (LNP) database **92**, call management services database (CMSDB) **94**, and call routing database **96**. Calls to a subscriber may be received from a SSP through I/O unit **86.** I/O unit **88** may be used to access the data server **16** or other databases such as a business services database (BSDB) which is used to allow subscribers to store call processing instructions, network management procedures and other data relevant to a private network of the subscriber. The data server may include a separate processor, particularly if the database is remote from the SCP or may comprise instructions running on the processing unit **82** of the SCP if the database is located within the storage device **90**.

In general, wherever the data server **16** is located, it will have an associated database for storing, maintaining and retrieving data or any combination of these functions.

In this embodiment, the memory **84** is programmed to direct the processing unit **82** to perform the conventional functions of a SCP in a SS**7** system and is further programmed to direct the processing unit to be capable of executing a combination of two main functions, namely a receiving from a SSF associated with an originator of a call, a call query relating to a call destination and communicating to a SSF associated with the call destination a reference to a database, in response to the call query.

The call query may be of the type specified by the Intelligent Network Application Protocol (INAP), the European Telecom Standards Institute (ETSI) Protocol, the Advanced Intelligent Network (AIN) Protocol, or the Capability Set **1** Revised (CS1 R) protocol, for example.

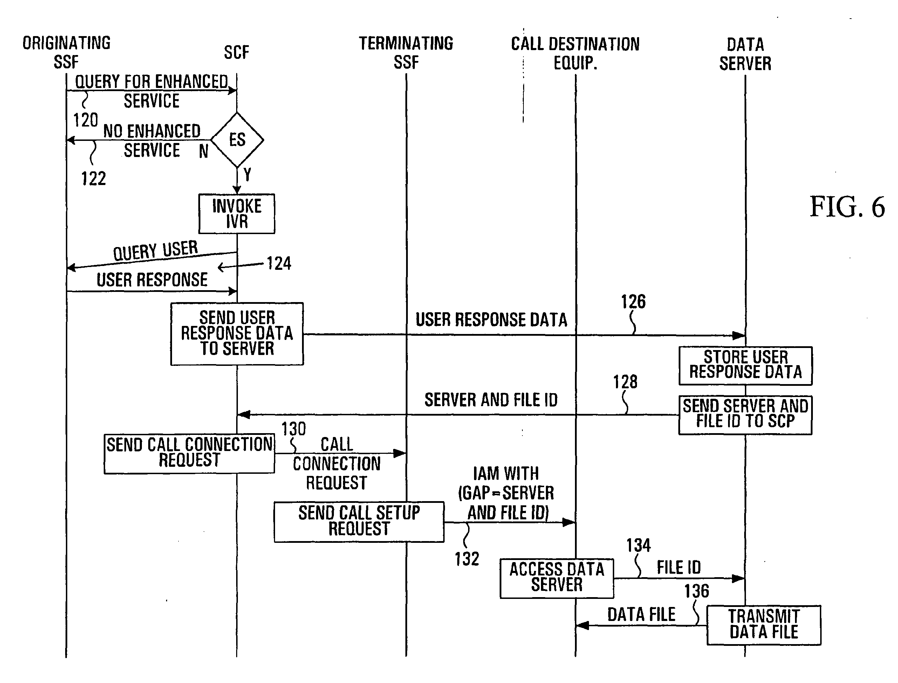

Referring to Figure **6**, in accordance with the present embodiment of the invention, the SCF receives a call query for an enhanced service as indicated at **120**. The SCF is configured to respond to a call query from an SSF by looking in a predefined location in the storage device **90** shown in Figure **4** such as a table of subscribers, for an entry indicating that the subscriber at the call destination indicated in the call query is a subscriber to a data transfer service in accordance with the invention. If the destination specified in the call query is not associated with a subscriber to the service, a message is sent back to the SSF as shown at **122** to indicate that enhanced services do not apply. If the destination specified in the call query is associated with a subscriber to the service, the SCF may look in a further predefined location in the storage device **90** to obtain a pre-stored reference to a data server. Such pre-stored reference may include an identification of the data server **16** itself and an identification of a file at the data server **16**, or if the data server is known a priori, the reference need only include an identification of a file on the server. In general, the reference to the data server **16** includes an identification of a network resource with which the destination equipment 15 can communicate to receive information, such as data, and such information or data may relate to a property of the call originating party, such as the caller's name and address, for example, and/or a property of the source equipment such as information associated with the line or a communications medium on which the call is originated, for example.

In addition, the SCF 14 may include programming to invoke operation of an Intelligent Voice Response (IVR) Unit 91 to establish communications with the caller as indicated generally at 124 to prompt the caller for information and to transmit such caller information to the data server as indicated at 126 for inclusion in the data server 16. Such transmission may occur by direct communication between the SCF processing unit 82 and the data server 16, either by direct communication with the database in storage device 90 or by communication through the I/O unit 88 to the data server if it is remote from the SCP, or by establishing communications with the data server by transmitting and receiving messages on a computer network as shown in Figures 2 and 3, for example.

Caller information obtained by the IVR unit 91 is stored (on request by the SCP) in the data server 16 in such a manner that it is associated with a reference which enables access by the destination equipment, when the reference is communicated to the destination equipment.

In addition to data extracted from the caller, the SCP/SSP may make available for storage in the data server 16 data such as service features invoked, details of services provided to the caller while waiting in a Network Queue, for example, etc.

In the case where the data server stores information retrieved from the user, the database determines where the caller information is to be stored at the database and produces a reference identifying a location from which the information can be retrieved. This reference has the same features as the pre-stored reference described above and may be used in conjunction with the pre-stored reference, or as a substitute therefor.

The data server communicates the reference back to the SCF, as indicated at 128 for communication to the SSP associated with the destination equipment 15. A computer network may be used to communicate the reference back to the SCF 14. The computer network may include a local area network, or may include an intranet or internet, for example.

When the SCF 14 receives the reference from the data server, it communicates it to the SSP 12 associated with the call destination as indicated at 130. Such communication may occur by preprogramming the SCF to encode and insert the reference into a call connection request message of the type specified in any of the protocols mentioned above, for receipt by the SSP associated with the call destination, although any communication which passes the reference to the SSP associated with the call destination will serve the purpose.

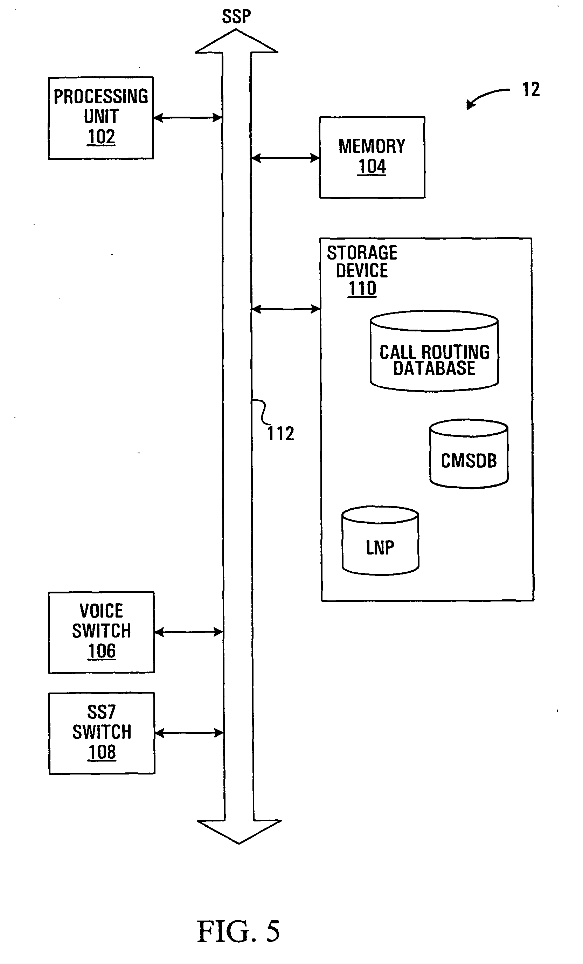

Referring to Figure 5, a representative SSF is shown generally at 12. In this embodiment, the SSF includes a processing unit 102 in communication with a program memory 104, a voice switch component 106, a SS7 switch component 108 and a storage device 110. Communications between these components is effected through a data bus 112. In general, the program memory 104 is programmed with includes instructions for directing the processing unit 102 to execute conventional IN call functions including the type which obtain information from call connection request messages received from a SCF and insert such information into an Initial Address Message (IAM) which is sent to call destination equipment.

In this embodiment, the SSF associated with the destination equipment is configured to execute a combination of at least two main functions including receiving from a SCF a reference to a data server and communicating that reference to equipment at a call destination. The memory 104 is a computer readable medium on which is stored codes for directing the processing circuit to execute this functionality. The memory maybe loaded by a computer data signal embodied in a carrier wave, for example, having code segments for providing the codes forming the stored codes described above.

Preferably the call destination equipment is also configured to send a service query to the SCF. The reference may be received from a Service Control Function through the SS7 switch component, by way of a call connection request message such as a call connection request according to the Intelligent Network Application Protocol (INAP), the European Telecom Standards Institute (ETSI) Protocol, the Advanced Intelligent Network (AIN) Protocol, or the Capability Set 1 Revised (CS1 R) protocol, for example. Generally any means by which the reference to the data server may be communicated from the SCF to the SSF is acceptable. It will be appreciated that conventional SCPs and SCFs normally use these protocols to execute other functionality and therefore are configured to respond to such messages. Consequently, conventional SSP Intelligent Network (IN) call functions already programmed into an SSP may be used to store the reference in a conventional Initial Address Message (IAM) of the type specified in the Integrated Services Digital Network (ISDN) User Part (ISUP) protocol.

To use an IAM message, in this embodiment a Generic Address Parameter (GAP) field of the IAM message is encoded with a representation of the reference received in the call connection request message from the SCF and the IAM message is transmitted to the destination equipment using conventional call setup procedures initiated by the SSF as indicated at 132. Alternatively, the reference may be communicated to the destination equipment by employing the SSF to encode it in a Calling Line ID (CLID) field of the IAM message. However, the use of the GAP field in the IAM message for conveying the reference is preferred, as this will not change the CLI field in the standard SSP CDR that may be used to charge back part or all of the call costs to the calling party (800 split billing or 900 calls). For example, by changing CLI fields at the SCP the CLI in the Billing record generated by the SSP is likely to change. This would then impact downstream billing processing. In general, a signaling message of any type detectable by the call destination equipment can be communicated from the SSF to the call destination equipment to make the call destination equipment aware of the reference to the data server.

### Call destination equipment

The call destination equipment **15** serves two main functions including receiving the signaling message including the reference to the data server **16** and establishing communications with the referenced data server **16** to access data in response to the signaling message. This functionality is provided at the call destination equipment on a computer readable medium on which is stored codes for directing a processing circuit at the call destination equipment to execute this functionality. The memory maybe located by a computer data signal embodied in a carrier wave, for example, having code segments for providing the codes forming the stored codes described above.

Where the signaling message is an IAM message as described above, the call destination equipment is capable of receiving such a message and is capable of extracting the reference from the message.

Once the reference has been obtained, the call destination equipment establishes communications with the data server 16 to use the reference to access data in the data server 16, as indicated at 134 in Figure 6.

The actual establishment of communications with the data server 16 may be accomplished by accessing the data server directly such as shown in Figure 3 or by transmitting and receiving messages on a computer network which may be a local area network, an intranet or an internet such as the public internet, for example, such as shown in Figures 1 and 2.

In the above manner, a reference to the data server 16 is passed to the call destination equipment 15 and the call destination equipment 15 uses the reference to access data in the data server 16, to receive pre-stored data relating to the caller or to receive data previously acquired from the user during the call as indicated at 136 in Figure 6. Such data may be used to route the call at the call destination equipment or fill a customer profile for a service representative at the call destination, for example.

It will be appreciated that one advantage of embodiments of this invention is that the SCP can maintain a single internet connection and store the data retrieved from the caller through that connection to the multiple locations for respective multiple destination sites or, the data may be stored on a local internet server. In general, this precludes the need for the SCP to exchange data with each end destination as is required with CTI. Consequently, embodiments of this invention provide a potentially better level of security and firewalling than is obtained with a CTI based implementation.

Other attributes of the invention include performance, predictability (from a SCP/SSP perspective) and reliability in conveying information to call destinations. Finally, because data is stored into a file, even if it is not accessed immediately, it may be reviewed at a later time for statistical or call back purposes.

While specific embodiments of the invention have been described and illustrated, such embodiments should be considered illustrative of the invention only and not as limiting the invention as construed in accordance with the accompanying claims.

## Claims

1. A method of communicating data to a call destination, the method comprising:
a) detecting a call request to a call destination, said call request from a call source;
b) receiving at a Service Switching Function of a switch associated with call destination equipment associated with said call destination, a reference to data stored in a data server said stored data relating to a property of said call source, and
c) communicating the reference to said call destination equipment, to enable said call destination equipment to access said data server and obtain said data for use during the requested call **characterized in that** said reference is communicated in an Initial Address Message, IAM.

2. The method as claimed in claim 1 further comprising communicating said data from said data server to said call destination equipment at said call destination identified by said call source, in response to said call request.

3. The method claimed in claim 1 further comprising establishing communications between said data server and said call destination equipment to permit said call destination equipment to access said data.

4. The method claims in claim 1 wherein communicating a reference to said data comprises communicating said reference to a Service Switching Function, SSF, associated with said call request.

5. The method claimed in claim 4 further comprising transmitting said reference from said SSF to said equipment at said call destination.

6. The method claimed in claim **1** further comprising receiving said data from a call source and storing said data at said data server.

7. The method claimed in claim 6 wherein storing said data at said database comprises transmitting said data to said data server.

8. The method claimed in claim 6 further comprising routing a telephone call in response to said data from said call source.

9. An apparatus for communicating data to a call destination, the apparatus comprising:
a) a detector (12) for detecting a call request to a call destination, said call request from a call source (18,20);
b) a Service Switching Function of a switch associated with call destination equipment associated with said call destination for receiving a reference to data stored in a data server said stored data relating to a property of said call source, and
b) a mechanism (12,14) for communicating the reference (REF) to said call destination equipment (15), to enable said call destination equipment to access said data server and obtain said data for use during the requested call **characterized in that** said reference is communicated in an Initial Address Message, IAM.

10. The apparatus claimed in claim 9 wherein said mechanism further communicates said data to equipment at said call destination identified by said call source.

11. The apparatus claimed in claim 9 wherein said mechanism is operable to establish communications between said data server and said equipment at said call destination to permit said equipment at said call destination to access said data.

12. The apparatus claimed in claim 11 wherein said detector comprises a Service Control Function (14) operable to produce said reference in response to detection of said call request.

13. The apparatus claimed in claim 9 further comprising a data gathering mechanism for gathering data from a call source and for causing said data to be stored at said data server.

14. The apparatus claimed in claim 14 wherein said data gathering mechanism comprises a transmitter for transmitting said data to said data server.

15. The apparatus claimed in claim 14 wherein said transmitter further comprises a network interface (24) for transmitting said data to said data server by transmitting and receiving messages on a computer network.

16. The apparatus claimed in claim 9 further comprising destination equipment (15) operable to route a telephone call in response to said data.

## Patentansprüche

1. Verfahren zur Kommunikation von Daten an ein Anruf-Ziel, wobei das Verfahren Folgendes umfasst:
a) Feststellen einer Anruf-Anforderung an ein Anruf-Ziel, wobei die Anruf-Anforderung von einer Anruf-Quelle ausgeht;
b) Empfangen, an einer Dienste-Vermittlungs-Funktion einer Vermittlung, die einer Anruf-Ziel-Ausrüstung zugeordnet ist, die mit dem Anruf-Ziel verbunden ist, eines Hinweises auf in einem Datenserver gespeicherte Daten, wobei die gespeicherten Daten sich auf eine Eigenschaft der Anruf-Quelle beziehen; und
c) Übertragen des Hinweises an die Anruf-Ziel-Ausrüstung, um es der Anruf-Ziel-Ausrüstung zu ermöglichen, einen Zugriff auf den Datenserver auszuführen und die Daten zur Verwendung während des angeforderten Anrufs zu gewinnen, **dadurch gekennzeichnet, dass** der Hinweis in einer Anfangs-Adressen-Mitteilung, IAM, übertragen wird.

2. Verfahren nach Anspruch 1, das weiterhin die Übertragung der Daten von dem Datenserver an die Anruf-Ziel-Ausrüstung an dem durch die Anruf-Quelle identifizierten Anruf-Ziel als Antwort auf die Anruf-Anforderung umfasst.

3. Verfahren nach Anspruch 1, das weiterhin den Aufbau von Kommunikationen zwischen dem Datenserver und der Anruf-Ziel-Ausrüstung umfasst, um der Anruf-Ziel-Ausrüstung einen Zugriff auf die Daten zu ermöglichen.

4. Verfahren nach Anspruch 1, bei dem die Übertragung eines Hinweises auf die Daten die Übertragung des Hinweises an eine Dienste-Vermittlungs-Funktion, SSF umfasst, die der Anruf-Anforderung zugeordnet ist.

5. Verfahren nach Anspruch 4, das weiterhin die Übertragung des Hinweises von der SSF an die Ausrüstung an dem Anruf-Ziel umfasst.

6. Verfahren nach Anspruch 1, das weiterhin den Empfang der Daten von einer Anruf-Quelle und die Speicherung der Daten an den Datenserver umfasst.

7. Verfahren nach Anspruch 6, bei dem das Speichern der Daten an der Datenbank das Senden der Daten an den Datenserver umfasst.

8. Verfahren nach Anspruch 6, das weiterhin die Routenführung eines Telefonanrufs in Abhängigkeit von den Daten von der Anruf-Quelle umfasst.

9. Vorrichtung zur Übertragung von Daten an ein Anruf-Ziel, wobei die Vorrichtung Folgendes umfasst:
a) einen Detektor (12) zum Erfassen einer Anruf-Anforderung an ein Anruf-Ziel, wobei die Anruf-Anforderung von einer Anruf-Quelle (18, 20) kommt.
b) eine Dienste-Vermittlungs-Funktion einer Vermittlung, die einer Anruf-Ziel-Ausrüstung zugeordnet ist, die mit dem Anruf-Ziel verbunden ist, um einen Hinweis auf Daten in einem Datenspeicher zu empfangen, wobei die gespeicherten Daten sich auf eine Eigenschaft der Anruf-Quelle beziehen, und
c) einen Mechanismus (12, 14) zur Übertragung des Hinweises (REF) an die Anruf-Ziel-Ausrüstung (15), um es der Anruf-Ziel-Ausrüstung zu ermöglichen, auf den Datenserver zuzugreifen und die Daten zur Verwendung während des angeforderten Anrufs zu gewinnen, **dadurch gekennzeichnet, dass** der Hinweis in einer Anfangs-Adressen-Mitteilung, IAM, übertragen wird.

10. Vorrichtung nach Anspruch 9, bei der der Mechanismus weiterhin die Daten an Ausrüstungen an dem Anruf-Ziel überträgt, das durch die Anruf-Quelle identifiziert ist.

11. Vorrichtung nach Anspruch 9, bei der der Mechanismus betreibbar ist, um Kommunikationen zwischen dem Datenserver und der Ausrüstung an dem Anruf-Ziel aufzubauen, um es der Ausrüstung an dem Anruf-Ziel zu ermöglichen, einen Zugriff auf die Daten auszuführen.

12. Vorrichtung nach Anspruch 11, bei der der Detektor eine Dienstesteuerungs-Funktion (14) umfasst, die betreibbar ist, um den Hinweis in Abhängigkeit von der Erfassung der Anruf-Anforderung zu erzeugen.

13. Vorrichtung nach Anspruch 9, die weiterhin einen Datenerfassungsmechanismus zur Erfassen von Daten von einer Anruf-Quelle und zum Bewirken der Speicherung der Daten an den Datenserver umfasst.

14. Vorrichtung nach Anspruch 13, bei dem der Datenerfassungsmechanismus einen Sender zum Senden der Daten an den Datenserver umfasst.

15. Vorrichtung nach Anspruch 14, bei der der Sender weiterhin eine Netzwerk-Schnittstelle (24) zum Senden der Daten an den Datenserver durch Senden und Empfangen von Mitteilungen auf einem Computer-Netzwerk umfasst.

16. Vorrichtung nach Anspruch 9, die weiterhin Ziel-Ausrüstungen (15) umfasst, die betreibbar sind, um einen Telefon-Anruf in Abhängigkeit von den Daten zu lenken.

## Revendications

1. Procédé de communication de données à une destination d'appel, le procédé comprenant les étapes consistant à :
a) détecter une requête d'appel à une destination d'appel, ladite requête d'appel provenant d'une source d'appel ;
b) recevoir sur une fonction de commutation de services d'un commutateur associé à un équipement de destination d'appel associé à ladite destination d'appel, une référence aux données étant stockée dans un serveur de données, lesdites données stockées concernant une propriété de ladite source d'appel; et
c) communiquer la référence au dit équipement de destination d'appel pour permettre au dit équipement de destination d'appel d'accéder au dit serveur de données et d'obtenir lesdites données pour les utiliser pendant l'appel demandé, **caractérisé en ce que** ladite référence est communiquée dans un message d'adresse initial (IAM).

2. Procédé selon la revendication 1, comprenant en outre l'étape consistant à communiquer lesdites données dudit serveur de données au dit équipement de destination d'appel à ladite destination d'appel identifiée par ladite source d'appel, en réponse à ladite requête d'appel.

3. Procédé selon la revendication 1, comprenant en outre l'étape consistant à établir des communications entre ledit serveur de données et ledit équipement de destination d'appel pour permettre au dit équipement de destination d'appel d'accéder aux dites données.

4. Procédé selon la revendication 1, dans lequel l'étape consistant à communiquer une référence aux dites données comprend l'étape consistant à communiquer ladite référence à une fonction de commutation de services (SSF) associée à ladite requête d'appel.

5. Procédé selon la revendication 4, comprenant en outre l'étape consistant à transmettre ladite référence de ladite SSF au dit équipement à ladite destination d'appel.

6. Procédé selon la revendication 1, comprenant en outre l'étape consistant à recevoir lesdites données d'une source d'appel et à stocker lesdites données dans ledit serveur de données.

7. Procédé selon la revendication 6, dans lequel l'étape consistant à stocker lesdites données dans ladite base de données comprend l'étape consistant à transmettre lesdites données au dit serveur de données.

8. Procédé selon la revendication 6, comprenant en outre l'acheminement d'un appel téléphonique en réponse aux dites données de ladite source d'appel.

9. Appareil pour communiquer des données à une destination d'appel, l'appareil comprenant :
a) un détecteur (12) pour détecter une requête d'appel à une destination d'appel, ladite requête d'appel provenant d'une source d'appel (18, 20) ;
b) une fonction de commutation de services d'un commutateur associé à l'équipement de destination d'appel associé à ladite destination d'appel pour recevoir une référence à des données stockées dans un serveur de données, lesdites données stockées concernant une propriété de ladite source d'appel, et
c) un mécanisme (12, 14) pour communiquer la référence (REF) au dit équipement de destination d'appel (15), pour permettre au dit équipement de destination d'appel d'accéder au dit serveur de données et d'obtenir lesdites données pour les utiliser pendant l'appel demandé, **caractérisé en ce que** ladite référence est communiquée dans un message d'adresse initial (IAM).

10. Appareil selon la revendication 9, dans lequel ledit mécanisme communique en outre lesdites données à l'équipement à ladite destination d'appel identifiée par ladite source d'appel.

11. Appareil selon la revendication 9, dans lequel ledit mécanisme est exploitable pour établir des communications entre ledit serveur de données et ledit équipement à ladite destination d'appel pour permettre au dit équipement à ladite destination d'appel d'accéder aux dites données.

12. Appareil selon la revendication 11, dans lequel ledit détecteur comprend une fonction de contrôle de services (14) exploitable pour produire ladite référence en réponse à la détection de ladite requête d'appel.

13. Appareil selon la revendication 9, comprenant en outre un mécanisme de recueil de données pour recueillir des données d'une source d'appel et pour amener lesdites données à être stockées dans ledit serveur de données.

14. Appareil selon la revendication 13, dans lequel ledit mécanisme de recueil de données comprend un émetteur pour transmettre lesdites données au dit serveur de données.

15. Appareil selon la revendication 14, dans lequel ledit émetteur comprend en outre une interface de réseau (24) pour transmettre lesdites données au dit serveur de données en transmettant et en recevant des messages sur un réseau d'ordinateurs.

16. Appareil selon la revendication 9, comprenant en outre un équipement de destination (15) exploitable pour acheminer un appel téléphonique en réponse aux dites données.
